# EUROPEAN PATENT SPECIFICATION

(11) **EP 2 954 940 B1**
(45) Date of publication and mention of the grant of the patent: **10.06.2020**
(21) Application number: 14172199.3
(22) Date of filing: 12.06.2014
(51) Int. Cl.: A63F 13/73, A63F 13/71, G06Q 30/02, G06F 9/445, G07F 17/32, A63F 13/61

(54) **Communication of reward data between applications**
Kommunikation zur Belohnungsdatenübermittlung zwischen Anwendungen
Communication de données de récompense entre des applications

(43) Date of publication of application: 16.12.2015
(73) Proprietor: Outfit7 Limited, London EC3M 6BN (GB)
(72) Inventor: Login, Samo, Pissouri (CY)
(74) Representative: Hoffmann Eitle

(56) References cited:
- WO-A1-2013/118629
- US-A1- 2002 002 076
- US-A1- 2004 092 310
- US-A1- 2008 167 106
- US-A1- 2012 036 003
- US-A1- 2013 185 133
- US-A1- 2013 324 260
- US-A1- 2013 325 573
- Anonymous: "Inter-process communication Contents", wikipedia, 18 April 2014 (2014-04-18), pages 1-4, XP055553622, Retrieved from the Internet: URL:https://en.wikipedia.org/w/index.php?t itle=Inter-process_communication&oldid=604 713283 [retrieved on 2019-02-07]

## Description

### [Technical Field]

The present invention generally relates to the field of data communication between computer applications and, more specifically, to a computer-implemented scheme of communicating reward data relating to a reward earned by the user of a first application to a second application for use by the second application.

### [Background]

There has been growing interest in systems for providing cross-promotional functionality between applications (commonly referred to as "apps"), which allow the user to claim and use a reward, which he/she has earned while using one application, in another application. Systems of this kind are described in US 2013/0324259 A1 and US 2013/0324260 A1, for example.

US 2013/0324260 A1 discloses a method of promoting an electronic game of electronic games, comprising: receiving inputs from a user, via a user interface, relating to playing first and second electronic games of the electronic games; associating, using a processor, user attributes of the first and second electronic games to the user based on the inputs; and associating, using an application programming interface (API) implemented on a server, a user attribute of a third electronic game that is different from the first and second electronic games, the API associating based, at least in part, on a rule engine implemented by the API and at least one of: the user attributes of the first and second electronic games; and game data of the third electronic game.

In US 2004/0092310 A1, a disclosed gaming network provides a method and system for identifying message senders through use of a communication protocol that includes a message field containing message contents and a verification field containing a verification signature. The verification signature is calculated by a message sender utilizing a valuation of the message contents and an identifier value provided by the message receiver.

In US 2002/0002076 A1, a system for playing electronic games includes a game server and one or more player terminals. Game results are based on a random number generated in each of the game server and the player terminals. The game server and the player terminals cooperate to ensure that the random numbers are generated independently. As a result, game players and the game host, such as a casino, can be confident that play results are not fraudulent. In one embodiment, the random numbers are transmitted between the game server and the player terminals at substantially the same time. In other embodiments, the random numbers are encoded and exchanged between the game server and the player terminals. Then, keys to decode the random numbers are exchanged.

As described in US 2008/0167106 A1, hashing is a process whereby input data, typically of arbitrary length, is transformed into output data, typically of shorter length and/or of fixed length. A hash function is a function that performs the transformation. Often, useful hash functions will be one-way functions. That is, for a given input, the output can be computed readily. However, for a given output, the input which produced the output will be difficult to calculate. Also, useful hash functions will often have the property that two differing inputs rarely produce the same output. Hashing can be used to verify that a message has not been altered. For example, Alice can send a plaintext message to Bob along with a hash value of the message. Alice can apply a digital signature to the hash value so as to assure Bob that the hash value has been sent by Alice. When Bob receives the plaintext message from Alice, Bob can compute the hash value of the message. If the hash value that Bob computes is the same as the hash value that Alice has sent to Bob, then Bob can be fairly confident that the message has not been altered en route from Alice to Bob.

In US 2012/0036003 A1, a system and method for tracking performance of an action in an application is disclosed in which a link to perform the application action is transmitted to a client device. In response to receiving an indication of the selection of the link, the performance of the action in the application by the client device is detected. Based on the detected performance of the application action, reward data is associated with a user of the client device.

In US 2013/0185133 A1, a method performed by one or more computing devices comprises storing, for one or more marketplace associated applications, interaction information that identifies, for each particular application of said one or more marketplace associated applications, a list of devices that interacted with an instance of the particular application; receiving, from a requesting device, a request for a list of offer eligible applications; determining, based on said interaction information, a set of applications associated with the requesting device; based on said determination of the set of applications associated with the requesting device, sending a list of one or more selected eligible applications to the requesting device.

Known systems for providing automated cross-promotions between electronic games have made use of a cross-promotional engine on a server that connects to users' electronic devices via the Internet to track each user's progress and their cross-promotional rewards. In these systems, reward definitions relating to rewards that a user has obtained while using a first application are sent to the cross-promotional engine, which stores the received reward definitions for subsequent retrieval by a second application which the user may open and use to claim their reward. These systems have the advantage of being versatile in that the second application need not run on the same device as the first application, allowing the user to benefit from using applications on a variety of different devices (e.g. their home PC, smartphone, laptop computer etc.).

### [Summary]

Despite the benefits of known cross-promotional systems mentioned above, the present inventor has recognised that the process of claiming the reward in these systems requires the device via which the reward is being claimed to connect to the cross-promotional engine via the Internet, which may not always be convenient or possible for the user. In view of this shortcoming of known cross-promotional systems, the present inventors have devised a scheme of securely communicating reward data between applications on a device that does not require the device to connect to the Internet, or any other kind of network, or any other device.

According to the present invention, there is provided a method as set out in Claim 1.

According to the present invention, there is also provided a storage medium as set out in Claim 10.

According to the present invention, there is further provided a signal as set out in Claim 11.

### [Brief Description of the Drawings]

Embodiments of the invention will now be explained in detail, by way of example only, with reference to the accompanying figures, in which:
Fig. 1 is schematic illustration of a system according to an embodiment of the present invention;
Fig. 2A is a schematic illustration of functional components provided in the data processing device 100 shown in Fig. 1;
Fig. 2B is a schematic illustration of functional components provided in the backend server 200 also shown in Fig. 1;
Fig. 3 is a schematic illustration of an example of programmable signal processing apparatus, which may be used to implement one or more of the functional components shown in Fig. 2A and Fig. 2B;
Fig. 4 is a flow diagram illustrating processes performed by the backend server and by an application in the form of a first electronic game described herein, when the first electronic game starts up for the first time after its installation;
Fig. 5 is a flow diagram illustrating processes performed by the backend server and by another application in the form of a second electronic game described herein, when the second electronic game starts up for the first time after its installation;
Fig. 6A is a flow diagram illustrating processes performed by the second electronic game, by which the user may accumulates rewards in the second electronic game, and submit a request to be credited with a reward in the first application that is based on the rewards earned in the second electronic game;
Fig. 6B is a flow diagram illustrating processes performed by the first electronic game, by which the user may be credited with a reward that is based on the rewards earned in the second electronic game;
Fig. 7 is a flow diagram showing further details of the process performed in step S315 in Fig. 6A;
Fig. 8 is a flow diagram showing further details of the process performed in step S325 in Fig. 6A; and
Fig. 9 is a flow diagram showing further details of the process performed in step S380 in Fig. 6B.

### [Detailed Description of Embodiments]

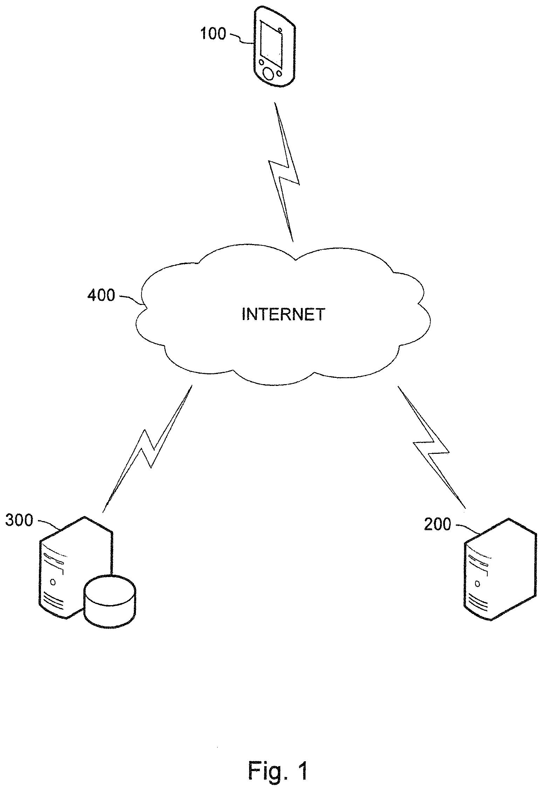

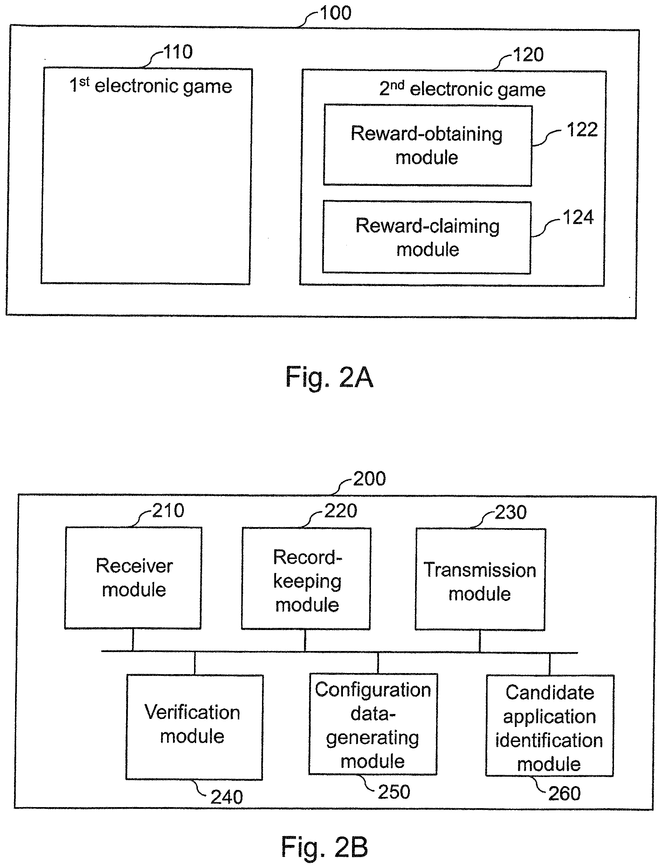

Fig. 1 provides a schematic illustration of a system according to an embodiment of the present invention, comprising a data processing device 100 that is operable to communicate with a backend server 200 and an application download server 300 via a network such as the Internet 400. Aspects of the configuration of the data processing device 100, the backend server 200 and the application download server 300 that are helpful for understanding the present invention are described in detail below, while the description of other aspects, which will be familiar to those skilled in the art, is omitted for the sake of clarity. Functional components of the data processing device 100 are illustrated in Fig. 2A, while those of the backend server 200 are illustrated in Fig. 2B.

The data processing device 100 of the present embodiment takes the exemplary form of a smartphone, onto which a primary application 110 in the exemplary form of a first electronic game has been downloaded from an application download server 300 (e.g. from the iTunes Store® or Google Play® store), as illustrated in Fig. 2A. During the course of the operations performed by the smartphone described below, a secondary application 120 in the exemplary form of a second electronic game is selected using the first electronic game, and then downloaded and installed onto the smartphone, and run to allow the user to earn rewards (e.g. virtual currency in the form of coins, jewels, moves etc.) in the second electronic game which may be passed to the first electronic game without the need for the smartphone to have a connection to the Internet 400 or any other kind of network, or to any other device, and which may be used in the first electronic game. It should be noted that the rewards used by the primary application 110 need not be of the same kind as the rewards used by the secondary application 120. In cases where the types of these rewards are different (e.g. the first electronic game recognises rewards in the form of gold coins, while the second electronic game rewards the user for completed tasks with rewards in the form of crystals), a conversion of the reward earned in the secondary application 120 to a form recognised by the primary application 110 may be performed, as described below.

It will be appreciated that the teachings herein are more generally applicable to many other kinds of data processing device, and many other kinds of application. For example, the data processing device 100 may be provided in the alternative form of a personal digital assistant (PDA), a tablet computer, laptop computer or a desktop PC, for example. Furthermore, the primary and secondary applications are not limited to being electronic games but may be any other kind of application that makes use of some kind of reward. As another example, the primary application 110 may be a mobile application for booking holidays (herein referred to as the "holiday booking app"), and the secondary application may be a mobile app for leaving reviews of hotels advertised in the holiday booking app (herein referred to as the "review app"), where the holiday booking app rewards the user with a reward in the form of a discount for using the review app to leave a review of one of the advertised hotels. It will become apparent from the following that the scheme for communicating reward data between applications on a data processing device 100 described herein can find many other interesting applications.

As also illustrated in Fig. 2A, the secondary application 120 comprises a reward-obtaining module 122 for generating rewards for the user, and a reward-claiming module 124 for placing the primary application 110 into an interactive state and passing the earned reward to the primary application 110 when in the interactive state. The functionalities of the reward-obtaining module 122 and the reward-claiming module 124 are described in detail below.

In the present embodiment, the reward-obtaining module 122 is configured to obtain the reward value by generating it in response to the user completing a predetermined task in the secondary application 120. Thus, the secondary application of the present embodiment, and other applications having a reward-obtaining module that is configured to obtain the reward value in this way, are referred to as "reward-generating applications".

Functional components of the backend server 200 are illustrated in Fig. 2B. As shown in the Fig. 2B, the backend server 200 comprises a receiver module 210, a record-keeping module 220, a transmission module 230, a verification module 240, a configuration data-generating module 250 and a candidate application identification module 260, which are arranged so as to be capable of exchanging information with one another. The functionalities of these components of the backend server 200 are also described in detail below. The backend server 200 also includes a backend server database, which stores sets of relations between various parameters relating to the primary application 110, the secondary application 120, reward claims made by the user, as well as a blacklist of reward-generating applications that may be used to generate rewards for use in the primary application 110.

A representation of the information stored in the backend server database is provided in Tables 1 to 5 below. The following Legend is provided as an aid for interpreting the information in Tables 1 to 5.

**Legend**

| **Table Name** | | | |
|---|---|---|---|
| **Field Name** | **Field Name** | **Field Name** | .... |
| *Field Type* | *Field Type* | *Field Type* | ... |
| Record 1 | | | |
| Record 2 | | | |
| . | | | |
| . | | | |

**Table 1**

| **Reward-generating applications** | | | | |
|---|---|---|---|---|
| **RGAppID** | **RGAppName** | **Vendor** | **DownloadLink** | ... |
| *String* | *String* | *String* | *String* | ... |
| RG1 | RGName1 | Vendor1 | Link1 | |
| RG2 | RGName2 | Vendor2 | Link2 | |
| . | | | | |
| . | | | | |

**Table 2**

| **Black-listed applications** | |
|---|---|
| **RGAppID** | ... |
| *Int* | ... |
| RG3 | |
| RG4 | |
| | |
| | |
| | |

**Table 3**

| **Primary applications** | | | | | |
|---|---|---|---|---|---|
| **PAppID** | **PAppName** | **URLschema_packageName** | **assetDetails** | **Vendor** | ... |
| *Int* | *String* | *String* | *String* | *String* | ... |
| P1 | PName1 | URL1 | Details1 | Vendor3 | |
| P2 | PName2 | URL2 | Details2 | Vendor4 | |
| | | | | | |
| | | | | | |
| | | | | | |

**Table 4**

| **App Associations** | | | | | | |
|---|---|---|---|---|---|---|
| **DeviceID** | **RGAppID** | **PAppID** | **DownloadRequested** | **AppInstalled** | **DateOfInstall** | ... |
| *Int* | *Int* | *Int* | *Yes*/*No (Default: No)* | *Yes*/*No (Default: No)* | *Datetime* | ... |
| ID1 | RG1 | P1 | Yes | Yes | Date1 | |
| ID1 | RG2 | P2 | Yes | No | | |
| | | | | | | |
| | | | | | | |
| | | | | | | |

**Table 5**

| **Claims** | | | | | | |
|---|---|---|---|---|---|---|
| **ClaimID** | **RewardAmount** | **RGAppID** | **PAppID** | **DeviceID** | **ClaimingApp** | ... |
| *Int* | *Int* | *In t* | *Int* | *String* | *RG* / *P* | ... |
| CID1 | 150 | RG1 | P1 | ID1 | RG | |
| CID2 | 150 | RG1 | P1 | ID1 | P | |
| CID3 | 100 | RG1 | P1 | ID1 | RG | |
| | | | | | | |
| | | | | | | |

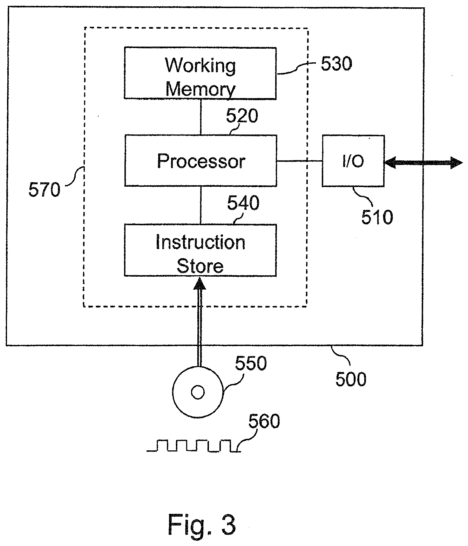

Figure 3 shows an exemplary implementation of the data processing device 100, in the form of programmable signal processing hardware. The signal processing apparatus shown in Fig. 3 comprises an input/output (I/O) section 510 that functions as an interface module of the apparatus for sending requests for configuration data, resource locators and records described herein below to the backend server 200 via the cell phone network and the Internet 400, and receiving the configuration data and other information from the backend server 200, as will be described in the following.

The signal processing apparatus further comprises a processor 520, a working memory 530 and an instruction store 540 for storing computer-readable instructions defining the primary application 110 and computer-readable instructions defining the secondary application 120 which, when executed by the processor 520, cause the processor 520 to perform the processing operations hereinafter described. The instruction store 540 may comprise a RAM or similar type of memory, and the computer-readable instructions can be input thereto from a computer program product, such as a computer-readable storage medium 550 such as a CD-ROM, etc. or a computer-readable signal 560 carrying the computer-readable instructions.

In the present embodiment, the combination of the hardware components shown in Fig. 3, comprising the processor 520, the working memory 530 and the instruction store 540, is configured to implement the functionality of the reward-obtaining module 122 and the reward-claiming module 124 shown in Fig. 2A. Similarly, a programmable signal processing apparatus of the kind shown in Fig. 3 may be used to implement the functional components of the backend server 200 that are shown in Fig. 2B.

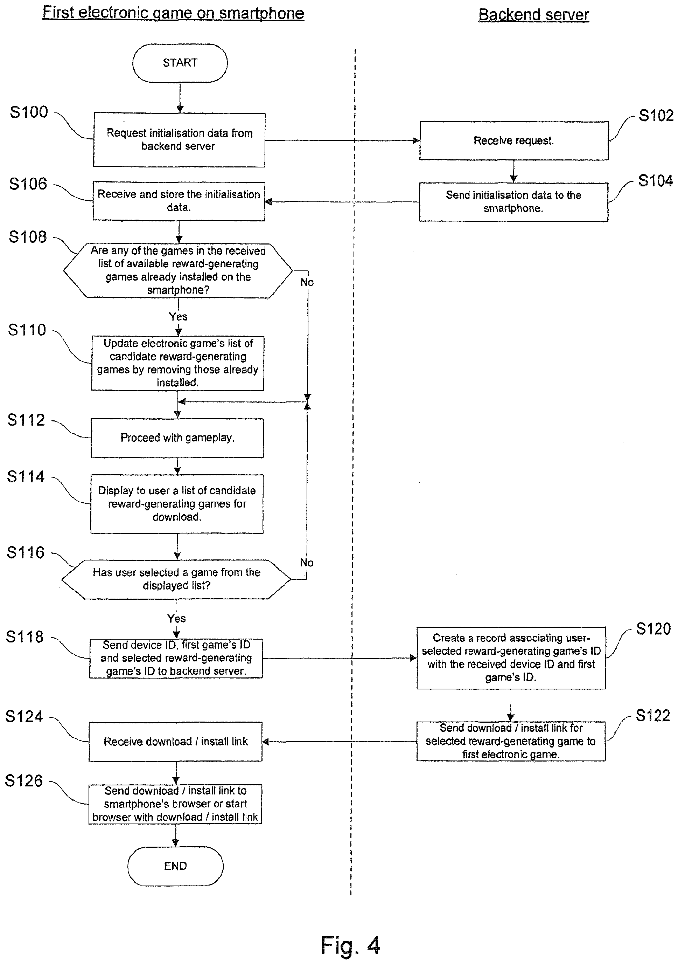

The processes performed by the smartphone in the present embodiment to execute the first electronic game so as to allow the selection and installation of the second electronic game, and to allow rewards earned by the user in the second electronic game to be passed to the first electronic game without the need for an Internet connection, will now be described with reference to Figs. 4 to 10.

Processes performed by the first electronic game of the present embodiment when it is first started up following its installation on the smartphone will now be described with reference to Fig. 4.

On its first start-up, the first electronic game performs an initialisation process during which it obtains a list of candidate reward-generating electronic games that is to be displayed to the user when the user plays the first electronic game, to allow the user to select a reward-generating electronic game that is to be downloaded to the smartphone from the application download server 300.

In more detail, in step S100, the first electronic game sends a request to the backend server 200 to receive initialisation data comprising a list of candidate reward-generating games that are available for download, wherein each of the reward-generating games is configured to generate a reward value when the user completes a predetermined task (for example, spending a predetermined amount of time playing the game, completing a level of the game, collecting a predetermined number of collectable items in the game, or achieving a predetermined score in the game). The requested initialisation data also includes a list of blacklisted games, a maximum reward value that the first electronic game should be allowed to accept, and priority data which defines an order of priority of the candidate reward-generating games. In step S102, the request for initialisation data is received by the receiver module 210 of the backend server 200.

The request for initialisation data, and some or all of the remaining messages that are communicated between applications running on the smartphone and an application running on the backend server 200, as described in the following, may be secured by encryption, using techniques well known to those skilled in the art.

The backend server 200 generates the list of candidate reward-generating games based on the information in Table 1 that is stored in the backend server database. More particularly, the candidate application identification module 260 of the backend server 200 generates a set of one or more identifiers each identifying a respective candidate reward-generating game for download from the application download server 300 to the smartphone, and generates a list comprising the generated one or more identifiers. The backend server 200 also generates the list of blacklisted games from the information in Table 2 that is also stored in the backend database. The games appearing in the blacklist are games whose reward claims should not be recognised by the first electronic game, as will be explained in the following. The maximum reward value is an upper reward value limit used to validate a reward passed to the first electronic game by a reward-generating game.

In step S104, the transmission module 230 of the backend server 200 sends the initialisation data to the first electronic game on the smartphone. In step S106, the initialisation data is received by the first electronic game and stored in the smartphone for subsequent use.

Next, the first electronic game checks the received list of candidate reward-generating games and removes from this list any reward-generating games that have already been installed on the smartphone. More specifically, in step S108, the first electronic game checks whether any of the games in the received list of available reward-generating games have already been installed on the smartphone. If none of the candidate reward-generating games have previously been installed on the smartphone, then the process proceeds to step S112. On the other hand, if at least one game from the list is determined to have been installed on the smartphone, then the process proceeds to step S110, in which the first electronic game updates the list of candidate reward-generating games by removing from this list the games that are already installed on the smartphone.

Following the initialisation process in steps S100 to S110, the first electronic game proceeds to run on the smartphone in step S112, allowing the user to play the game using e.g. the touch-screen of the smartphone. At a predetermined point in the game play (for example, when the user has completed a predetermined task such as completing a level of the game) or at point in the game that is randomly selected by the first electronic game or by the user (e.g. by the user pressing an icon displayed in a designated part of the smartphone's touch screen), the first electronic game displays to the user in step S114 a list of candidate reward-generating games that are available for download to the smartphone from the application download server 300 via the Internet 400. The games appearing in the list may be ordered using the received priority data, and may be represented in any desirable way, for example by name or an icon. In the present embodiment, the list is displayed as part of a message informing the user that rewards for use in the first electronic game can be obtained by downloading and playing one of the listed games. However, the message also gives the user the option of declining to select a game for installation, and to instead return to playing the first electronic game.

In step S116, the first application determines whether the user has selected a game from the displayed list for installation on the smartphone. If the user has not selected a game for installation but has indicated that he/she wishes to return to playing the first electronic game instead, then the process loops back to step S112. On the other hand, if the user has selected a game from the displayed list (e.g. by touching an icon on the smartphone's screen that is associated with the game), then the first electronic game receives the user's selection and obtains a resource locator for use in downloading the selected reward-generating game to the smartphone from the application download server 300 for installation as the second electronic game.

More specifically, in step S118, the first application obtains the resource locator by transmitting a resource locator request to a backend server 200 to request a resource locator for downloading the selected reward-generating game from the application download server 300. The resource locator request comprises a unique device identifier that uniquely identifies the smartphone (e.g. the smartphone's IMEI number or, more preferably, the IDFA (i.e. the Identifier for Advertisers, also abbreviated to IFA) on iOS® devices, and the 'Advertising ID' on Android® devices), a first identifier identifying the first electronic game, and a second identifier identifying the selected reward-generating electronic game.

In step S120, the receiver module 210 of the backend server 200 receives the message from the first electronic game, and the record-keeping module 220 of the backend server 200 creates a record in the backend server database, the record associating the identifier ("ID") of the selected reward-generating game with the unique ID of the smartphone and the ID of the first electronic game. This record is created in the part of the backend server database that is illustrated in Table 4, with the received device ID being recorded in the "DeviceID" field, the selected reward-generating game's ID being recorded in the "RGAppID" field, and the ID of the first electronic game being recorded in the "PAppID" field. In addition, the backend server 200 records an indication ("Yes") in the "DownloadRequested" field in Table 4 to indicate that the first electronic game identified in the "PAppID" field on the device identified in the "DeviceID" field has made a request to download the reward-generating game identified in the "RGAppID" field.

In response to the first application's resource locator request, the transmission module 230 of the backend server 200 transmits (in step S122) the resource locator in the form of a download link (such as a URL) that allows an application browser in the smartphone (e.g. the iTunes® app on an iOS® device) to find and download the selected reward-generating game to the smartphone. In step S124, the smartphone receives the requested resource locator from the backend server 200 and passes the resource locator to the first electronic game. Then, in step S126, the received download link is passed by the first electronic game to the application browser in the smartphone. In the present embodiment, the application bowser requests the user to confirm that he/she wishes to download and install the selected reward-generating game on the smartphone and, after the user has confirmed that he/she wishes to do so, the selected reward-generating game is downloaded from the application download server 300 using the received resource locator, and installed as the second electronic game on the smartphone. It should be noted, however, that the user may choose to open the smartphone's application browser and find the selected reward-generating game by him/herself, without using the resource locator, and then download install the selected reward-generating game.

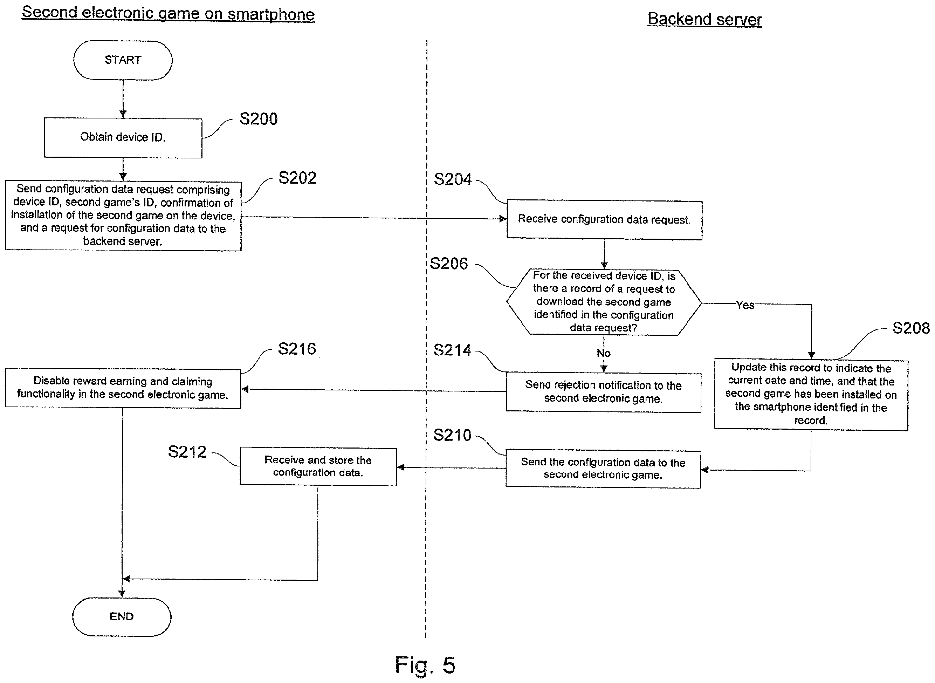

Following its installation on the smartphone, the second electronic game is configured to perform an initialisation process the first time it is started, which will now be described with reference to Fig. 5.

Once the second electronic game has been launched for the first time, it communicates with the backend server 200 in order to obtain configuration data that enables it to generate rewards for use in the first electronic game.

More specifically, in step S200, the second game obtains the unique device ID of the smartphone. Next, in step S202, the second electronic game generates and transmits to the backend server 200 a request to receive configuration data from the backend server 200, which comprises the unique device ID of the smartphone and the second identifier that identifies the second game to allow the backend server 200 to verify the validity of the request to receive configuration data. The request may, as in the present embodiment, also include a confirmation that the second electronic game has been installed on the smartphone.

Upon receiving the request for configuration data from the second game, the backend server 200 processes this request to determine whether the second electronic game was downloaded to the smartphone by the user using the first electronic game. If the second game is determined to have been downloaded by use of the first electronic game, namely by the user using the first game to selected the second game from the displayed list, rather than directly via the application browser (i.e. without using the first game, for example), then the backend server 200 supplies the relevant configuration data to the second electronic game. On the other hand, if the backend server 200 determines that the second electronic game was not downloaded and installed using the first electronic game, then the backend server 200 does not send configuration data to the second game, such that the second game remains unable to pass to the first game any rewards that the user has earned through playing the second game.

In more detail, in step S204 of Fig. 5, the receiver module 210 of the backend server 200 receives from the second electronic game the request for configuration data and, in step S206, the verification module 240 of the backend server 200 verifies the validity of the request to receive configuration data by checking the unique device identifier and the second identifier in the request to receive configuration data against the record created by the record-keeping module 220. More specifically, the verification module 240 checks whether there is a record in the backend server 200 database (more specifically, in Table 4) comprising a device identifier that matches the device identifier provided in the request. If such a record is found, the verification module 240 further determines in step S206 whether that record indicates that the first electronic game identified in the record has previously requested a resource locator for the second electronic game that is identified by the second identifier in the received request for configuration data (i.e. whether the record having the device ID and the second identifier has "Yes" indicated in the "DownloadRequested" field). If such a record is found and that record indicates that the first game identified in the record has previously requested a resource locator for the second electronic game that is identified in the received request for configuration data, then the checks in step S206 are passed, otherwise they are failed.

If the checks in step S206 are passed, then the process proceeds to step S208, wherein the record-keeping module 220 updates the record found in step S206 to indicate both of the current date and time, and that the second electronic game has been installed in the device that is identified in the record. This is achieved by the record-keeping module 220 entering the date and time of the install in the "DateOfInstall" field, and an indication ("Yes") in the "AppInstalled" field of Table 4.

When the validity of the received request for configuration data has been verified by the verification module 240, the transmission module 230 of the backend server 200 transmits the configuration data to the second electronic game, in step S210. The configuration data for the second electronic game comprises the ID of the first electronic game, and links to reward assets to be used when displaying rewards information in the second electronic game (e.g. icons, colours, etc.). These assets are stored in the part of the backend server's database that is illustrated in Table 3. The configuration data further comprises application start-up data for starting up the first game, which may be dependent on the smartphone's operating system. For example, the application start-up data may comprise the URL schema for starting the first game where the smartphone is an iOS® device, or a package name for starting the first game where the smartphone is an Android® device. The backend server 200 obtains the application start-up data from the part of the backend server database that is illustrated in Table 3. In addition, the configuration data includes the maximum reward value as well as a session reward limit, whose use is described below.

In step S212, the second electronic game receives and stores the configuration data sent by the backend server 200.

On the other hand, if no record of a request to download the second electronic game by the first electronic game is found in step S206, then the process may, as in the present embodiment, proceed to step S214, wherein the transmission module 230 of the backend server 200 sends a rejection notification to the second electronic game, and to step S126, wherein the second electronic game receives the rejection notification and displays a message to the user indicating that reward claiming has not been enabled for the second electronic game. Alternatively, the backend server 200 may perform no further processes when the outcome of the determination in step S206 is "No".

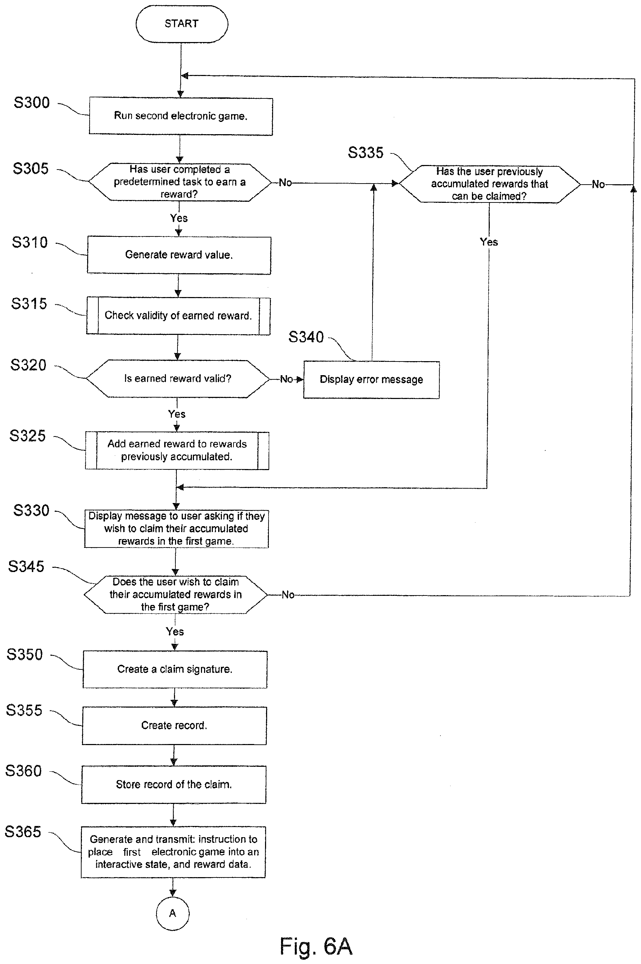

After the first and second electronic games have been installed on the smartphone and run to execute the initialisation processes that have been described above with reference to Figs. 4 and 5, the second game is able to pass to the first game reward data comprising a reward value that is indicative of a reward earned by the user upon completing a predetermined task in the second game, without the need for the smartphone to connect to the Internet 400, any other kind of network, or any other device, as will now be explained by reference to Figs. 6A, 6B and 7 to 9.

Referring firstly to Fig. 6A, in step S300, the second electronic game is run on the smartphone, allowing the user to play the game. The second electronic game may be one of the many different kinds of game known to those skilled in the art, such an infinite runner, a platform game, a level-based game or a village building game. While playing the second game, the reward-obtaining module 122 may award the user with a reward each time he/she completes a predetermined task in the second game, for example when the user spends a predetermined amount of time playing an infinite runner game, completing a level of a level-based game, collecting a predetermined number of collectable items in a platform game, or achieving a predetermined score. The reward-obtaining module 122 may reward the user for completing the same task repeatedly (e.g. each time the user accumulates a predetermined number of credits (e.g. coins), or each time the user has spent a required amount of time playing the game). Additionally or alternatively, the reward-obtaining module 122 may reward the user for completing different tasks. For example, the reward-obtaining module 122 may reward the user with a reward each time they collect a predetermined number of coins, and reward them with a larger reward when they complete a particular level of the game. Many other ways of rewarding the user for using the second game may be envisaged by those skilled in the art.

When the reward-obtaining module 122 determines that the user is to be rewarded for playing the second game in step S305, the process proceeds to step S310, wherein the reward-obtaining module 122 generates a reward value that associated with the task in the game that the user has completed. In the present embodiment, the reward value is given in units of 0.1 cents USD, which forms the unit of a universal currency that is accepted by the primary application 110 and all of the reward-generating applications stored by the application download server 300 for download to the smartphone by use of the primary application 110, as described above. Furthermore, the tasks are set such that, for example, one US dollar's-worth of rewards should take three hours to earn. In this example, it should take the user 12 seconds to earn a reward of 0.1 cents USD. The reward displayed to the user in the second game, on the other hand, need not be provided in units of the universal currency but may alternatively be provided in units (e.g. coins, lives, moves etc.) that are selected by the developer of the game.

It will, however, be appreciated that another denomination of a US dollar, a denomination of another real-world currency (e.g. GBP, Euro, JPY etc.), or a virtual currency that is recognised in the applications in the system of the present embodiment, may alternatively form a unit of the universal currency that is used in the present embodiment to transfer rewards earned in one application on the smartphone to another application on the smartphone.

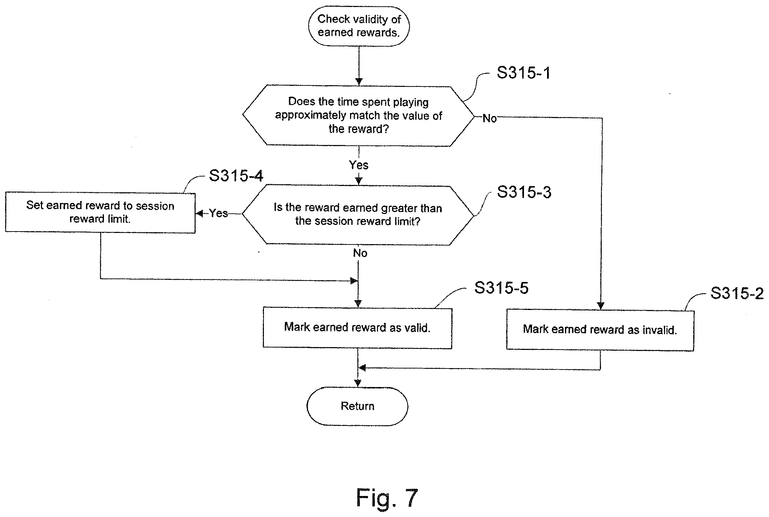

The reward-claiming module 124 of the second electronic game may, as in the present embodiment, proceed to determine in step S315 whether the reward value generated by the reward-obtaining module 122 is valid based on the time that the user has spent playing the second game. An example of the process that may be performed by the reward-claiming module 124 in step S315 to verify the validity of the reward that has been generated by the reward-obtaining module 122 will now be described with reference to Fig. 7.

The reward-claiming module 124 of the present embodiment is configured to monitor the time spent by the user in playing the second game. In step S315-1, the reward-claiming module 124 compares this measured time with the time that the user is expected to take to earn the reward value on the above-mentioned basis that it should take three hours of game play to earn a reward equivalent to one USD in value. Thus, in step S315-1, the reward-claiming module 124 calculates the time that the user is expected to take to earn the reward value based on the reward value and a conversion factor relating the unit of reward value to time spent playing the game.

If the expected gameplay time exceeds the measured gameplay time by more than a predetermined amount (e.g. 30 minutes, to allow for users with higher levels of skill), the reward-claiming module 124 determines that the reward value generated by the reward-obtaining module 122 is unacceptably generous and therefore rejects the reward as invalid. The process then proceeds to step S315-2, in which the reward-claiming module 124 marks the reward as invalid, and the process continues to step S320 in Fig. 6A.

On the other hand, if the expected gameplay time does not exceed the measured gameplay time by more than the predetermined amount, the reward-claiming module 124 determines that the reward value generated by the reward-obtaining module 122 is reasonable and therefore accepts the reward as valid. The process may then continue to step S315-3.

In step S315-3, which may be performed even in the absence of the validity check performed in step 315-1, the reward-claiming module 124 determines whether the reward value generated by the reward-obtaining module 122 exceeds the session reward limit. If the reward value exceeds the session reward limit, then the reward is capped at the session reward limit by the reward-claiming module 124 in step S315-4, otherwise it is not capped. The reward value (whether or not it has been capped) is then marked as valid in step S315-5, the process continues to step S320 in Fig. 6A.

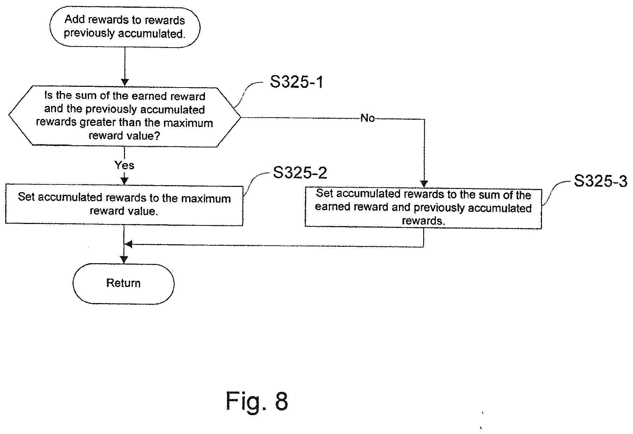

Referring again to Fig. 6A, in step S320, the reward-claiming module 124 responds to a determination that the reward value is valid by proceeding to step S325, in which it adds the validated reward value to an accumulated reward value obtained by summing valid reward values that have previously been generated by the reward-obtaining module 122. Further details of this process are shown illustrated in the flow diagram of Fig. 8.

In step S325-1 shown in Fig. 8, the reward-claiming module 124 performs a check to determine whether the sum of the reward value generated by the reward-obtaining module 122 and the reward values from the reward-obtaining module 122 that have previously been accumulated is greater than the maximum reward value communicated to the smartphone in step S210 as part of the configuration data.

If it is determined in step S325-1 that the sum of the earned reward value and the previously accumulated reward values is greater than the maximum reward value, processing may proceed to step S325-2, where the total accumulated reward value is capped at the maximum reward value. The process then continues to step S330 in Fig. 6A.

However, if the sum of the earned reward value and the previously accumulated reward values is determined in step S325-1 to be less than or equal to the maximum reward value, the process proceeds to step S325-3, wherein the total accumulated reward value is set to the sum of the earned reward value and the previously accumulated reward values. The process then continues to step S330 in Fig. 6A.

Referring once again to Fig. 6A, if, at step S305, it is determined that the user has not completed a predetermined task in the second game, processing proceeds to step S335. In step S335, the reward-claiming module 124 checks whether the user has previously accumulated rewards which can be claimed for use in the first electronic game. If the user has previously accumulated rewards which can be claimed, the process proceeds to step S330. If the user has not previously accumulated rewards which can be claimed, the process loops back to step S300.

If the reward-claiming module 124 determines in step S320 that the latest reward earned by the user is invalid, the process may, as in the present embodiment, proceed to step S340, wherein the second electronic game displays an error message to the user informing the user that the reward he/she might have expected to earn by the point they have reached in the game cannot be awarded. The reward value generated by the reward-obtaining module 122 is discarded in this case. It should be noted that step S340 is optional and it may be preferable in other embodiments to omit it in order to avoid interrupting gameplay.

After at least one reward value has been generated by the reward-obtaining module 122 and its validity has been verified by the reward-claiming module 124 of the second electronic game, the second electronic game may give the user the option to claim their reward(s) so that it may be used in a first electronic game. If the user chooses to claim the reward(s), the second electronic game passes the details of the reward to the first electronic game so that the user can benefit from using the reward in the first electronic game, as will now be explained.

In step S330, the second electronic game displays a message to the user inviting the user to indicate whether he/she wishes to claim their accumulated rewards. Next, in step S345, the second electronic game determines whether or not the user has selected to claim their accumulated rewards. If the user selects not to claim their accumulated rewards, the process returns to step S300.

However, if the user indicates that he/she does wish to claim their accumulated rewards, the reward-claiming module 124 generates and transmits an instruction to place the first electronic game into an interactive state, and the reward-claiming module 124 further generates and transmits reward data on the basis of the reward value for use by the first electronic game when in the interactive state. Further details of the reward data are provided in the following.

The instruction to place the first electronic game into an interactive state may cause the operating system of the smartphone to launch the first electronic game (i.e. perform a "cold start" by loading the first electronic game into the smartphone's random access memory (RAM) and then running the first electronic game in the foreground) so that the first game's user interface is displayed on the smartphone's screen, allowing the user to interact with it. Alternatively, the instruction to place the first electronic game into an interactive state may cause the smartphone's operating system to manage the first electronic game, after it has been launched and is running in the background, so that the first electronic game runs in the foreground and the user is thus able to interact with the user interface of the first electronic game while it is displayed on the smartphone's screen. Thus, it will be appreciated that the placing of an application into an "interactive state" should be understood to refer to causing the application to be executed on the smartphone such that the user interface of the application is displayed by the smartphone to allow the user to interact with the application's user interface. However, prior to generating and transmitting the instruction and the reward data, the reward-claiming module 124 generates the reward data so that it includes a signature for verifying the validity of the reward data, as will now be explained.

In step S350, the reward-claiming module 124 creates the signature by generating an encoding based on at least one of the first identifier that identifies the first electronic game, the second identifier that identifies the second electronic game, a time stamp obtained from the smartphone's system clock, and a value indicative of the reward value that has been used to generate the reward data. The reward-claiming module 124 may, as in the present embodiment, use a Hash function to generate the encoding based on two, three or all of the aforementioned parameters. More particularly, the signature may, as in the present embodiment, be generated using the following formula: SHA1(<Second electronic game ID>+<First electronic game ID>+<Date and time stamp>+<Reward Amount>), where <...> indicates the value of the parameter between the angle brackets, "+" is a concatenation operator and SHA1 refers to the Secure Hash Algorithm function SHA-1.

Next, in step S355, the reward-claiming module 124 creates a record indicating that the instruction and the reward data have been generated, the record including a unique claim ID which uniquely identifies a reward claim request made by the user. The record is stored in the smartphone so that its data can later be transmitted to the backend server 200, to allow the backend server 200 to keep track of the reward claims made by the user.

Next, in step S360, the details of the reward being claimed are stored by the reward-claiming module 124. Processing then proceeds to step S365, wherein the reward-claiming module 124 uses the above-mentioned configuration data to generate and transmit the reward data and the instruction to place the first electronic game into the interactive state. More specifically, in the present embodiment, the second electronic game starts up the first electronic game using the URL schema, which forms part of the reward data and which has been provided during initialisation of the second electronic game in step S210, as explained above. The reward data further comprises the following parameters, which are included in a URI generated by the reward-claiming module 124:
- The Reward Amount. This is the size of the reward claimed specified in the universal currency which is used by all of the reward-generating applications;
- The second identifier identifying the second electronic game;
- The first identifier identifying the first electronic game for which rewards are being claimed;
- The claim signature generated in step S350;
- The unique claim ID generated in step S355; and
- The device ID of the smartphone.

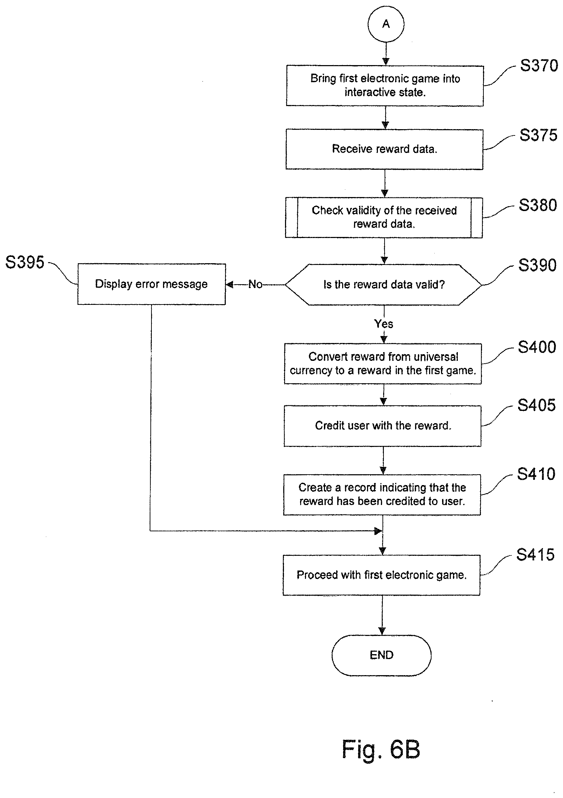

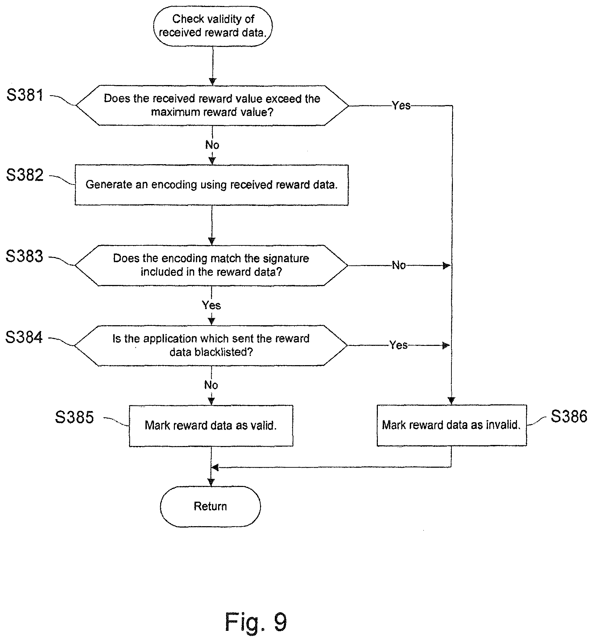

The processes by which the first electronic game starts up, verifies the validity of the reward data, and credits the user with the reward earned in the second electronic game will now be described with reference to Figs. 6B and 9.

In step S370, the instruction generated by the reward-claiming module 124 in step S365 causes the first electronic game to be brought into the interactive state by the smartphone's operating system, for example by the operating system loading and launching the first electronic game, or by changing the first electronic game from running in the background to run in the foreground.

In step S375, the first electronic game, having been brought into the interactive state, passively receives the reward data generated by the reward-claiming module 124. The first electronic game receives the reward data in response to the smartphone's operating system pushing the reward data to the first electronic game. However, in another embodiment, the second electronic game may alternatively push the reward data to the first electronic game. The first electronic game may, as in the present embodiment, use an SDK (Software Developer Kit) API call to store the reward data in local memory of the smartphone (e.g. the working memory 530 shown in Fig. 3).

Then, in step S380, the first electronic game checks the validity of the received reward data. To do this, the first electronic game may, as in the present embodiment, use a different SDK API call to read the reward data from the local memory, decode it and check the validity of the reward data. An example of a process by which the first electronic game uses a reward-verifying module in the exemplary form of an SDK API to verify that the received reward data is valid will now be described with reference to Fig. 9.

As shown in the flow diagram of Fig. 9, the SDK API of the first electronic game used in step S380 firstly determines, in step S381, whether the reward value that has been extracted from the reward data exceeds the maximum reward value that has been received by the first electronic game in step S106, determining that the received reward data is valid when the reward value is equal to or below the maximum reward value. If the reward value is determined not to be equal to or below the maximum reward value, then the API determines that the reward value is unacceptably large and proceeds to mark the reward data as invalid, in step S386.

On the other hand, if the check in step S381 is passed, then the API performs a further validity check using other information that has been included as part of the reward data, as will now be explained.

As noted above, the reward data comprises a second identifier that identifies the second electronic game, a date and time stamp, and a signature for verifying validity of the reward data. The API of the first electronic game performs the further check to verify that the reward data is valid by generating in step S382 an encoding based on the parameters that have been used to generate the signature in the reward data. In the present embodiment, the API of the first electronic game thus generates in step S382 an encoding based on the identifier of the first electronic game, and received values of the second identifier, the date and time stamp, and the reward value. More specifically, in the present embodiment, the API generates this encoding by evaluating a Hash function using the same formula as was used by the reward-claiming module 124 to generate the signature in step S350, namely: SHA1(<Second electronic game ID>+<First electronic game ID>+<Date and time stamp>+<Reward Amount>).

Then, in step S383, the first electronic game's API compares the generated encoding with the signature in the received reward data, and determines that the received reward data is valid when the generated encoding is the same as the signature in the reward data. If the generated encoding is not found to match the signature in step S383, then the API proceeds to mark the reward data as invalid, in step S386.

However, if the generated encoding is determined to match (i.e. be the same as) the signature in step S383, then the API determines in step S384 whether the application which sent the reward data appears in the black-list which was provided to the first electronic game in step S106, as part of the initialisation data. If the application which sent the reward data is determined to have been black-listed, then the API proceeds to mark the reward data as invalid, in step S386. Otherwise, the reward data is marked as valid, in step S385. The process then proceeds to step S390 in Fig. 6B.

Referring again to Fig. 6B, in step S390, the API makes a decision based on whether the reward data was determined to be valid, causing the first electronic game to display an error message to the user in step S395 if the reward data was found to be invalid, and proceeding to step S400 if the reward data was found to be valid.

In step S400, the reward value included in the reward data is converted by the first electronic game from the universal currency to a reward that is used in the first electronic game, for example to give the user a reward in the form of one or more extra moves, or a number points lives etc. that are commensurate in value to the reward value expressed in the universal currency. Then, in step S405, the first electronic game credits the user with the reward.

Next, in step S410, the first electronic game creates a record of the reward having been credited to the user. This record may later be sent to the backend server 200 in order to track the level of rewards being claimed and other parameters. The first electronic game then proceeds to run as normal, in step S415.

The first and second electronic games may, for time to time, when an Internet connection is available, flush the records generated in steps S360 and S410 to the backend server 200 in other to allow the backend server 200 to keep track of successful reward claims that have been made by the user.

## Claims

1. A method of communicating reward data from a first application (120) running on a data processing device (100) to a second application (110) on the data processing device (100) when the data processing device is not connected to a network, the reward data being for use by the second application (110) to allow a user to claim and use in the second application a reward earned while using the first application, the method comprising the first application (120) performing processes of:
generating a reward value (S310) in response to a user of the first application (120) completing a predetermined task in the first application (120); and
in response to a request from the user to claim a reward, generating and transmitting (S365):
an instruction to place the second application (110) into an interactive state; and
reward data, the reward data being generated on the basis of the reward value for use by the second application (110) in the interactive state, and further comprising a unique claim ID which uniquely identifies the request from the user to claim a reward;
wherein the first application (120) further performs the following processes prior to generating the reward value (S310) and prior to generating the reward data and the instruction to place the second application (110) into the interactive state (S365):
obtaining a unique device identifier (S200) that uniquely identifies the data processing device (100);
generating a request to receive configuration data from a server (200), the request to receive configuration data comprising the unique device identifier and a first identifier identifying the first application (120) to allow the server (200) to verify validity of the request to receive configuration data;
transmitting the generated request (S202) to the server (200) via the Internet (400);
receiving the configuration data (S212) from the server (200) when the validity of the request to receive configuration data has been verified by the server (200), the configuration data comprising a second identifier that identifies the second application (110) and further comprising application start-up data for starting up the second application (110); and
using the application start-up data of the configuration data to generate the instruction to place the second application (110) into the interactive state, and
wherein the first application (120) creates a record indicating that the instruction and the reward data have been generated and transmitted, the record comprising the unique claim ID, and transmits the record to the server (200) via the Internet (400) when an internet connection is available, to enable the server (200) to keep track of reward claims made by the user based on the record transmitted by the first application (120) and a corresponding record transmitted by the second application (110).

2. A method according to claim 1, wherein:
the first application (120) generates the reward data (S365) to comprise a signature for verifying validity of the reward data, and
wherein the first application (120) creates the signature (S350) by generating an encoding using a hash function based on at least two of:
a first identifier identifying the first application (120),
a second identifier identifying the second application (110),
a time stamp obtained from a system clock of the data processing device, and
an indication of the reward value that has been used to generate the reward data.

3. A method according to any preceding claim, wherein the first application (120) generates the reward data based on a sum of reward values (S325), and wherein the first application (120) caps the sum of reward values at a predetermined maximum reward value (S325-2).

4. A method according to any preceding claim, wherein the first application (120) comprises:
a reward-obtaining module (122) which generates a reward value (S310) in response to the user using the first application (120) for a predetermined period of time; and
a reward-claiming module (124) which generates the instruction to place the second application (110) into the interactive state, and generates the reward data by:
determining whether the reward value generated by the reward-obtaining module (122) is valid (S315) based on the time that the user has spent using the first application (120); and
generating the reward data based on the reward value when the reward value is determined to be valid.

5. A method according to any preceding claim, further comprising the second application (110) that runs on the data processing device (100) processing the reward data by:
passively receiving the reward data (S375) in response to at least one of an operating system of the data processing device (100) and the first application (120) pushing the reward data to the second application (110);
extracting the reward value from the received reward data;
using the extracted reward value in the second application (110) to allow a user to claim and use in the second application a reward earned while using the first application; and
creating a record of the reward having been credited to the user, and transmitting the record to the server (200) via the Internet (400) when an internet connection is available, to enable the server (200) to keep track of reward claims made by the user based on the record transmitted by the second application (110) and a corresponding record transmitted by the first application (120).

6. A method according to claim 5, further comprising the second application (110) verifying that the received reward data is valid (S380) by determining whether the extracted reward value exceeds a maximum reward value (S381), and determining that the received reward data is valid when the reward value is below the maximum reward value.

7. A method according to claim 5 or claim 6, wherein the reward data received by the second application (110) further comprises a first identifier identifying the first application (120), a time stamp obtained from a system clock of the data processing device, and a signature for verifying validity of the reward data, and wherein the second application (110) further performs processes to verify that the received data is valid by:
generating an encoding (S382) based on the parameters that have been used to generate the signature in the received reward data;
comparing the generated encoding with the signature in the received reward data (S383); and
determining that the received reward data is valid when the generated encoding matches the signature.

8. A method according to any of claims 5 to 7, further comprising, prior to the second application (110) passively receiving the reward data, the second application (110) performing processes of:
displaying to the user a list of candidate applications (S114) for download by the data processing device (100) from a first server (300) via the Internet (400);
receiving a selection made by the user of a candidate application for download; and
based on the selection made by the user, obtaining from a second server (200) a resource locator for use in downloading the selected application to the data processing device (100) from the first server (300) for installation as the first application.

9. A method according to claim 8, wherein the second application (110) obtains the resource locator by:
transmitting a resource locator request (S118) to a second server (200) to request a resource locator for downloading the first application (120) from the first server (300), the resource locator request comprising:
a unique device identifier that uniquely identifies the data processing device (100);
a first identifier identifying the first application (120); and
a second identifier identifying the second application (110); and
receiving the requested resource locator (S124) from the second server (200) in response to the resource locator request.

10. A storage medium (550) storing computer program instructions which, when executed by a processor (520), cause the processor (520) to perform a method according to at least one of claims 1 to 9.

11. A signal (560) carrying computer program instructions which, when executed by a processor (520), cause the processor (520) to perform a method according to at least one of claims 1 to 9.

## Patentansprüche

1. Verfahren zur Kommunikation von Belohnungsdaten von einer ersten Anwendung (120), die auf einer Datenverarbeitungsvorrichtung (100) läuft, an eine zweite Anwendung (110) auf der Datenverarbeitungsvorrichtung (100), wenn die Datenverarbeitungsvorrichtung nicht an ein Netzwerk angeschlossen ist, wobei die Belohnungsdaten zur Verwendung von der zweiten Anwendung (110) dazu bestimmt sind, es einem Benutzer zu erlauben, in der zweiten Anwendung eine Belohnung zu beanspruchen und zu verwenden, die verdient wurde, während die erste Anwendung verwendet wurde, wobei das Verfahren die Ausführung der Prozesse der ersten Anwendung (120) umfasst, nämlich:
Erzeugung eines Belohnungswerts (S310) als Antwort darauf, dass ein Benutzer der ersten Anwendung (120) eine vorbestimmte Aufgabe in der ersten Anwendung (120) abschließt; und
als Antwort auf eine Anfrage des Benutzers zur Beanspruchung einer Belohnung, Erzeugung und Übertragung (S365):
einer Anweisung, die zweite Anwendung (110) in einen interaktiven Zustand zu versetzen; und
von Belohnungsdaten, wobei die Belohnungsdaten auf der Basis des Belohnungswerts zur Verwendung durch die zweite Anwendung (110) in dem interaktiven Zustand erzeugt werden, und des Weiteren eine eindeutige Anspruchs-ID umfassen, die die Anfrage des Benutzers zur Beanspruchung einer Belohnung eindeutig identifiziert;
wobei die erste Anwendung (120) des Weiteren die folgenden Prozesse ausführt, bevor sie den Belohnungswert erzeugt (S310), und bevor sie die Belohnungsdaten und die Anweisung zur Versetzung der zweiten Anwendung (110) in den interaktiven Zustand erzeugt (S365):
Empfang eines eindeutigen Geräte-Identifikators (S200), der die Datenverarbeitungsvorrichtung (100) eindeutig identifiziert;
Erzeugung einer Anfrage zum Empfang von Konfigurationsdaten von einem Server (200), wobei die Anfrage zum Empfang von Konfigurationsdaten den eindeutigen Geräte-Identifikator und einen ersten Identifikator umfasst, der die erste Anwendung (120) identifiziert, um es dem Server (200) zu erlauben, die Gültigkeit der Anfrage um Empfang von Konfigurationsdaten zu prüfen;
Übertragung der erzeugten Anfrage (S202) an den Server (200) über das Internet (400);
Empfang der Konfigurationsdaten (S212) von dem Server (200), wenn die Gültigkeit der Anfrage um Empfang von Konfigurationsdaten von dem Server (200) geprüft wurde, wobei die Konfigurationsdaten einen zweiten Identifikator umfassen, der die zweite Anwendung (110) identifiziert, und des Weiteren Anwendungs-Startdaten zum Starten der zweiten Anwendung (110) umfassen; und
Verwendung der Anwendungs-Startdaten der Konfigurationsdaten zum Erzeugen der Anweisung, die zweite Anwendung (110) in den interaktiven Zustand zu versetzen, und
wobei die erste Anwendung (120) eine Aufzeichnung anlegt, die angibt, dass die Anweisung und die Belohnungsdaten erzeugt und übertragen wurden, wobei die Aufzeichnung die eindeutige Anspruchs-ID umfasst und die Aufzeichnung an den Server (200) über das Internet (400) überträgt, wenn ein Internetanschluss verfügbar ist, um es dem Server (200) zu ermöglichen, die Belohnungsansprüche, die der Benutzer stellt, basierend auf der Aufzeichnung, die von der ersten Anwendung (120) übertragen wird, und einer ersten Aufzeichnung, die von der zweiten Anwendung (110) übertragen wird, zu verfolgen.

2. Verfahren nach Anspruch 1, wobei:
die erste Anwendung (120) die Belohnungsdaten (S365) mit einer Signatur r zur Prüfung der Gültigkeit der Belohnungsdaten erzeugt, und
wobei die erste Anwendung (120) die Signatur (S350) anlegt, indem sie eine Codierung erzeugt, die eine Hash-Funktion basierend auf mindestens zwei der Folgenden verwendet:
einen ersten Identifikator, der die erste Anwendung (120) identifiziert,
einen zweiten Identifikator, der die zweite Anwendung (110) identifiziert,
einen Zeitstempel, der von einer Systemuhr der Datenverarbeitungsvorrichtung erhalten wird, und
eine Angabe des Belohnungswerts, der verwendet wurde, um die Belohnungsdaten zu erzeugen.

3. Verfahren nach einem vorstehenden Anspruch, wobei die erste Anwendung (120) die Belohnungsdaten basierend auf einer Summe von Belohnungswerten (S325) erzeugt, und wobei die erste Anwendung (120) die Summe von Belohnungswerten auf einen vorbestimmten maximalen Belohnungswert begrenzt (S325-2).

4. Verfahren nach einem vorstehenden Anspruch, wobei die erste Anwendung (120) Folgendes umfasst:
ein Belohnungserhaltungsmodul (122), das einen Belohnungswert als Antwort darauf, dass der Benutzer die erste Anwendung (120) während einer vorbestimmten Zeitspanne verwendet, erzeugt (S310); und
ein Belohnungsbeanspruchungsmodul (124), das die Anweisung zur Versetzung der zweiten Anwendung (110) in den interaktiven Zustand erzeugt, und die Belohnungsdaten erzeugt durch:
Bestimmung, ob der Belohnungswert, der von dem Belohnungserhaltungsmodul (122) erzeugt wurde, gültig ist (S315) basierend auf der Zeit, die der Benutzer beim Verwenden der ersten Anwendung (120) verbracht hat; und
Erzeugung der Belohnungsdaten basierend auf dem Belohnungswert, wenn der Belohnungswert als gültig befunden wird.

5. Verfahren nach einem vorstehenden Anspruch, das des Weiteren die zweite Anwendung (110) umfasst, die auf der Datenverarbeitungsvorrichtung (100) läuft, die die Belohnungsdaten verarbeitet durch
passiven Empfang der Belohnungsdaten (S375) als Antwort darauf, dass mindestens ein Betriebssystem der Datenverarbeitungsvorrichtung (100) und die erste Anwendung (120) die Belohnungsdaten zu der zweiten Anwendung (110) pushen;
Extraktion des Belohnungswerts aus den empfangenen Belohnungsdaten; Verwendung des extrahierten Belohnungswerts in der zweiten Anwendung (110), um es einem Benutzer zu erlauben, in der zweiten Anwendung eine Belohnung zu beanspruchen und zu verwenden, die verdient wurde, während die erste Anwendung verwendet wurde; und
Anlegen einer Aufzeichnung der Belohnung, die dem Benutzer kreditiert wurde, und Übertragung der Aufzeichnung an den Server (200) über das Internet (400), wenn ein Internetanschluss verfügbar ist, um es dem Server (200) zu ermöglichen, die Belohnungsansprüche, die der Benutzer gestellt hat, basierend auf der Aufzeichnung, die von der zweiten Anwendung (110) übertragen wurde, und einer entsprechenden Aufzeichnung, die von der ersten Anwendung (120) übertragen wurde, zu verfolgen.

6. Verfahren nach Anspruch 5, das des Weiteren umfasst, dass die zweite Anwendung (110) prüft, dass die empfangenen Belohnungsdaten gültig sind (S380), indem sie bestimmt, ob der extrahierte Belohnungswert einen maximalen Belohnungswert überschreitet (S381), und indem sie bestimmt, dass die empfangenen Belohnungsdaten gültig sind, wenn der Belohnungswert unterhalb des maximalen Belohnungswerts liegt.

7. Verfahren nach Anspruch 5 oder 6, wobei die Belohnungsdaten, die von der zweiten Anwendung (110) empfangen werden, des Weiteren einen ersten Identifikator umfassen, der die erste Anwendung (120) identifiziert, einen Zeitstempel, der von einer Systemuhr der Datenverarbeitungsvorrichtung erhalten wird, und eine Signatur zum Prüfen der Gültigkeit der Belohnungsdaten, und wobei die zweite Anwendung (110) weitere Prozesse ausführt, um zu prüfen, dass die empfangenen Daten gültig sind, durch:
Erzeugung einer Codierung (S382) basierend auf den Parametern, die verwendet wurden, um die Signatur in den empfangenen Belohnungsdaten zu erzeugen;
Vergleich der erzeugten Codierung mit der Signatur in den empfangenen Belohnungsdaten (S383); und
Bestimmung der Gültigkeit der empfangenen Belohnungsdaten, wenn die erzeugte Codierung mit der Signatur übereinstimmt.

8. Verfahren nach einem der Ansprüche 5 bis 7, das, bevor die zweite Anwendung (110) die Belohnungsdaten passiv empfängt, des Weiteren umfasst, dass die zweite Anwendung (110) Prozesse ausführt, nämlich:
Anzeige für den Benutzer einer Liste von Kandidatenanwendungen (S114) zum Downloaden durch die Datenverarbeitungsvorrichtung (100) von einem ersten Server (300) über das Internet (400);
Empfang einer Auswahl, die von dem Benutzer einer Kandidatenanwendung zum Downloaden getroffen wurde; und
basierend auf der Auswahl, die von dem Benutzer getroffen wurde, Empfang eines Ressource Locators von einem zweiten Server (200) zur Verwendung beim Downloaden der ausgewählten Anwendung auf die Datenverarbeitungsvorrichtung (100) von dem ersten Server (300) zum Installieren als die erste Anwendung.

9. Verfahren nach Anspruch 8, wobei die zweite Anwendung (110) den Ressource Locator erhält durch:
Übertragung einer Ressource Locatoranfrage (S118) an einen zweiten Server (200), um einen Ressource Locator zum Downloaden der ersten Anwendung (120) von dem ersten Server (300) anzufordern, wobei die Ressource Locatoranfrage Folgendes umfasst:
eine eindeutige Gerätekennung, die die Datenverarbeitungsvorrichtung (100) eindeutig identifiziert;
einen ersten Identifikator, der die erste Anwendung (120) identifiziert; und
einen zweiten Identifikator, der die zweite Anwendung (110) identifiziert; und
Empfang des angeforderten Ressource Locators (S124) von dem zweiten Server (200) als Antwort auf die Ressource Locatoranfrage.

10. Speichermedium (550), das Computerprogrammanweisungen speichert, die, wenn sie von einem Prozessor (520) ausgeführt werden, den Prozessor (520) veranlassen, ein Verfahren nach mindestens einem der Ansprüche 1 bis 9 auszuführen.

11. Signal (560), das Computerprogrammanweisungen trägt, die, wenn sie von einem Prozessor (520) ausgeführt werden, den Prozessor (520) veranlassen, ein Verfahren nach mindestens einem der Ansprüche 1 bis 9 auszuführen.

## Revendications

1. Procédé de communication de données de récompense d'une première application (120) exécutée sur un dispositif de traitement de données (100) à une seconde application (110) sur le dispositif de traitement de données (100) quand le dispositif de traitement de données n'est pas connecté à un réseau, les données de récompense étant destinées à être utilisées par la seconde application (110) pour permettre à un utilisateur de réclamer et utiliser dans la seconde application une récompense gagnée lors de l'utilisation de la première application, le procédé comprenant l'exécution par la première application (120) des processus suivants :
la génération d'une valeur de récompense (S310) en réponse à un utilisateur de la première application (120) achevant une tâche prédéterminée dans la première application (120) ; et
en réponse à une demande provenant de l'utilisateur pour réclamer une récompense, la génération et la transmission (S365) :
d'une instruction pour placer la seconde application (110) dans un état interactif ; et
de données de récompense, les données de récompense étant générées sur la base de la valeur de récompense pour l'utilisation par la seconde application (110) dans l'état interactif, et comprenant en outre un ID de réclamation unique qui identifie de manière unique la demande provenant de l'utilisateur pour réclamer une récompense ;
dans lequel la première application (120) effectue en outre les processus suivants avant la génération de la valeur de récompense (S310) et avant la génération des données de récompense et l'instruction pour placer la seconde application (110) dans l'état interactif (S365) :
l'obtention d'un identificateur de dispositif unique (S200) qui identifie de manière unique le dispositif de traitement de données (100) ;
la génération d'une demande pour recevoir des données de configuration à partir d'un serveur (200), la demande pour recevoir des données de configuration comprenant l'identificateur de dispositif unique et un premier identificateur identifiant la première application (120) pour permettre au serveur (200) de vérifier une validité de la demande pour recevoir des données de configuration ;
la transmission de la demande générée (S202) au serveur (200) via Internet (400) ;
la réception des données de configuration (S212) à partir du serveur (200) quand la validité de la demande pour recevoir des données de configuration a été vérifiée par le serveur (200), les données de configuration comprenant un second identificateur qui identifie la seconde application (110) et comprenant en outre des données de démarrage d'application pour démarrer la seconde application (110) ; et
l'utilisation des données de démarrage d'application des données de configuration pour générer l'instruction pour placer la seconde application (110) dans l'état interactif, et
dans lequel la première application (120) crée un enregistrement indiquant que l'instruction et les données de récompense ont été générées et transmises, l'enregistrement comprenant l'ID de réclamation unique, et transmet l'enregistrement au serveur (200) via Internet (400) quand une connexion Internet est disponible, pour permettre au serveur (200) de garder une trace de réclamations de récompense effectuées par l'utilisateur sur la base de l'enregistrement transmis par la première application (120) et d'un enregistrement correspondant transmis par la seconde application (110).

2. Procédé selon la revendication 1, dans lequel :
la première application (120) génère les données de récompense (S365) pour comprendre une signature pour vérifier une validité des données de récompense, et
dans lequel la première application (120) crée la signature (S350) en générant un codage en utilisant une fonction de hachage sur la base d'au moins deux parmi :
un premier identificateur identifiant la première application (120),
un second identificateur identifiant la seconde application (110),
un horodatage obtenu à partir d'une horloge de système du dispositif de traitement de données, et
une indication de la valeur de récompense qui a été utilisée pour générer les données de récompense.

3. Procédé selon une quelconque revendication précédente, dans lequel la première application (120) génère les données de récompense sur la base d'une somme de valeurs de récompense (S325) et dans lequel la première application (120) plafonne la somme de valeurs de récompense à une valeur de récompense maximale prédéterminée (S325-2).

4. Procédé selon une quelconque revendication précédente, dans lequel la première application (120) comprend :
un module d'obtention de récompense (122) qui génère une valeur de récompense (S310) en réponse à l'utilisateur utilisant la première application (120) pendant une période de temps prédéterminée ; et
un module de réclamation de récompense (124) qui génère l'instruction pour placer la seconde application (110) dans l'état interactif et génère les données de récompense par :
la détermination si la valeur de récompense générée par le module d'obtention de récompense (122) est valide (S315) sur la base du temps que l'utilisateur a passé en utilisant la première application (120) ; et
la génération des données de récompense sur la base de la valeur de récompense quand la valeur de récompense est déterminée comme étant valide.

5. Procédé selon une quelconque revendication précédente, comprenant en outre la seconde application (110) qui est exécutée sur le dispositif de traitement de données (100) traitant les données de récompense par :
la réception passive des données de récompense (S375) en réponse à au moins un parmi un système d'exploitation du dispositif de traitement de données (100) et la première application (120) déplaçant les données de récompense vers la seconde application (110) ;
l'extraction de la valeur de récompense des données de récompense reçues ;
l'utilisation de la valeur de récompense extraite dans la seconde application (110) pour permettre à un utilisateur de revendiquer et d'utiliser dans la seconde application une récompense gagnée lors de l'utilisation de la première application ; et
la création d'un enregistrement de la récompense ayant été créditée à l'utilisateur, et la transmission de l'enregistrement au serveur (200) via Internet (400) quand une connexion Internet est disponible, pour permettre au serveur (200) de garder une trace de réclamations de récompense effectuées par l'utilisateur sur la base de l'enregistrement transmis par la seconde application (110) et d'un enregistrement correspondant transmis par la première application (120).

6. Procédé selon la revendication 5, comprenant en outre la vérification par la seconde application (110) que les données de récompense reçues sont valides (S380) en déterminant si la valeur de récompense extraite dépasse une valeur de récompense maximale (S381), et la détermination que la valeur de récompense extraite est valide quand la valeur de récompense est au-dessous de la valeur de récompense maximale.

7. Procédé selon la revendication 5 ou la revendication 6, dans lequel les données de récompense reçues par la seconde application (110) comprennent en outre un premier identificateur identifiant la première application (120), un horodatage obtenu à partir d'une horloge de système du dispositif de traitement de données et une signature pour vérifier une validité des données de récompense, et dans lequel la seconde application (110) effectue en outre des processus pour vérifier que les données reçues sont valides par :
la génération d'un codage (S382) sur la base des paramètres qui ont été utilisés pour générer la signature dans les données de récompense reçues ;
la comparaison du codage généré avec la signature dans les données de récompense reçues (S383) ; et
la détermination que les données de récompense reçues sont valides quand le codage généré correspond à la signature.

8. Procédé selon l'une quelconque des revendications 5 à 7, comprenant en outre, avant la réception passive des données de récompense par la seconde application (110), l'exécution par la seconde application (110) des processus suivants :
l'affichage pour l'utilisateur d'une liste d'applications candidates (S114) pour un téléchargement par le dispositif de traitement de données (100) à partir d'un premier serveur (300) via Internet (400) ;
la réception d'une sélection effectuée par l'utilisateur d'une application candidate à télécharger ; et
sur la base de la sélection effectuée par l'utilisateur, l'obtention à partir d'un second serveur (200) d'un localisateur de ressources pour l'utilisation dans le téléchargement de l'application sélectionnée vers le dispositif de traitement de données (100) à partir du premier serveur (300) pour l'installation comme la première application.

9. Procédé selon la revendication 8, dans lequel la seconde application (110) obtient le localisateur de ressources par :
la transmission d'une demande de localisateur de ressources (S118) à un second serveur (200) pour demander un localisateur de ressources pour le téléchargement de la première application (120) à partir du premier serveur (300), la demande de localisateur de ressources comprenant :
un identificateur de dispositif unique qui identifie de manière unique le dispositif de traitement de données (100) ;
un premier identificateur identifiant la première application (120) ; et
un second identificateur identifiant la seconde application (110) ; et
la réception du localisateur de ressources demandé (S124) à partir du second serveur (200) en réponse à la demande de localisateur de ressources.

10. Support de stockage (550) stockant des instructions de programme informatique qui, quand elles sont exécutées par un processeur (520), amènent le processeur (520) à effectuer un procédé selon au moins une des revendications 1 à 9.

11. Signal (560) transportant des instructions de programme informatique qui, quand elles sont exécutées par un processeur (520), amènent le processeur (520) à effectuer un procédé selon au moins une des revendications 1 à 9.
